# DEMANDE DE BREVET EUROPEEN

(11) **EP 4 848 511 A1**
(43) Date de publication de la demande: **02.12.2026**
(21) Numéro de dépôt: 26180829.9
(22) Date de dépôt: 25.05.2026
(51) Int. Cl.: H02H 9/02, H02H 9/00

(54) **CIRCUIT DE PROTECTION D'UNE INTERFACE DE CONNEXION**

(30) Priorité: 26.05.2025 FR 2505624
(71) Demandeur: STMicroelectronics International N.V., 1228 Plan-les-Ouates, Geneva (CH)
(72) Inventeur: ROUVIERE, Mathieu, 37000 TOURS (FR); LECOCQ, Tristan, 37110 VILLEDOMER (FR)
(74) Mandataire: Cabinet Beaumont

(57) **Abrégé**

La présente description concerne un circuit électronique de protection (100) comprenant au moins :
- une source de tension (102) configurée pour délivrer en sortie un courant de détection de couplage d'un connecteur à un port de connexion (300) destiné à être couplé électriquement au circuit électronique de protection ;
- un régulateur de courant (104) configuré pour délivrer en sortie (108) un courant de valeur maximale égale à celle du courant de détection ;
- un premier commutateur (110) couplé électriquement entre la sortie de la source de tension et une entrée (106) du régulateur de courant ;
- un deuxième commutateur (112) couplé électriquement entre une première borne d'entrée/sortie (114) du circuit électronique de protection et l'entrée du régulateur de courant ;
- un troisième commutateur (116) couplé électriquement entre la première borne d'entrée/sortie et la sortie du régulateur de courant.

## Description

### Domaine technique

La présente description concerne de façon générale le domaine de la protection électrique dans une interface électronique de connexion, en particulier pour une interface de connexion de type USB-C ou USB Type-C, c'est-à-dire bus série universel de type C.

### Technique antérieure

Dans une interface électronique de connexion telle qu'une interface de type USB-C, un microcontrôleur fonctionnant avec de faibles tensions, par exemple inférieures ou égales à 5 V, est couplé à un port de connexion à travers un contrôleur, appelé « USB-C PD controller » ou « USB-C Power Delivery controller » en anglais, ou contrôleur de distribution de puissance USB-C, externe au microcontrôleur, qui gère notamment les niveaux de tension et de courant des signaux échangés sur le port de connexion. Un autre circuit externe au microcontrôleur et au contrôleur USB-C PD est dédié à la protection du microcontrôleur et du contrôleur USB-C PD contre les surtensions et les pics de courant pouvant apparaître sur le port de connexion, par exemple à cause d'une décharge électrostatique, d'une source d'énergie défectueuse couplée au port de connexion, ou bien d'un court-circuit entre les bornes du port de connexion.

Dans une configuration optimisée, le contrôleur USB-C PD est embarqué dans le microcontrôleur, et un seul circuit externe, appelé TCPP ou « Type-C Port Protection » en anglais, ou protection de port de Type-C, gère les tensions et courants importants et assure la protection contre les potentiels pics de courant et surtensions. Ce circuit TCPP gère également la détection d'un couplage entre deux objets USB-C à travers la connexion au port USB-C.

Dans cette configuration optimisée, une source de courant du circuit TCPP est utilisée pour détecter un couplage entre un objet USB-C de type « SOURCE » (ou « Host ») au niveau du circuit TCPP et un objet USB-C de type « SINK » (ou « Device »). En l'absence d'objet USB-C de type SINK (ou simplement appelé SINK) couplé au port de connexion, le microcontrôleur est placé dans un mode veille afin qu'il ne consomme pas ou très peu de courant. Lorsqu'un couplage d'un SINK au port de connexion est détecté par le circuit TCPP, via l'apparition de courants circulant sur une des lignes CC1 et CC2 dans le cas d'une connexion USB-C, le circuit TCPP réveille le microcontrôleur. La source de courant du microcontrôleur prend alors le relais pour les échanges de signaux.

La transition entre l'utilisation de la source de courant du circuit TCPP et celle du microcontrôleur doit se faire sans interruption (transition de type MBB ou « Make Before Break » en anglais, ou fermeture avant ouverture) afin notamment de ne pas avoir de haute impédance sur la ou les lignes concernées du connecteur. Pour cela, la source de courant du microcontrôleur et celle du circuit TCPP se retrouvent connectées toutes les deux en parallèle à au moins une même broche du port de connexion pendant une partie de cette phase de transition. Or, une telle transition peut engendrer, sur la ou les broches du port de connexion concernées, des pics de courant dont les valeurs peuvent dépasser la limite haute permise par la norme, par exemple des pics de courant dépassant 360 µA.

### Résumé de l'invention

Il existe un besoin un circuit électronique de protection destiné à être utilisé dans une interface de connexion, ne présentant pas les inconvénients des solutions existantes.

Pour cela, un mode de réalisation propose un circuit électronique de protection comprenant au moins :
- une source de tension configurée pour délivrer en sortie un courant de détection de couplage d'un connecteur à un port de connexion destiné à être couplé électriquement au circuit électronique de protection ;
- un régulateur de courant configuré pour délivrer en sortie un courant de valeur maximale égale à celle du courant de détection ;
- un premier commutateur couplé électriquement entre la sortie de la source de tension et une entrée du régulateur de courant ;
- un deuxième commutateur couplé électriquement entre une première borne d'entrée/sortie du circuit électronique de protection et l'entrée du régulateur de courant ;
- un troisième commutateur couplé électriquement entre la première borne d'entrée/sortie et la sortie du régulateur de courant.

Selon un mode de réalisation particulier, le circuit électronique de protection comprend en outre un quatrième commutateur couplé électriquement entre la sortie du régulateur de courant et une deuxième borne d'entrée/sortie du circuit électronique de protection à laquelle le port de connexion est destiné à être couplé électriquement.

Selon un mode de réalisation particulier, chacun des commutateurs comporte au moins un transistor à effet de champ.

Selon un mode de réalisation particulier, le circuit électronique de protection comporte en outre une première diode dont une cathode est couplée électriquement à l'entrée du régulateur de courant et une anode est couplée électriquement à la sortie de la source de tension, et une deuxième diode dont une cathode est couplée électriquement à l'entrée du régulateur de courant et une anode est couplée électriquement à la première borne d'entrée/sortie.

Selon un mode de réalisation particulier, le régulateur de courant est configuré pour délivrer le courant de détection de valeur égale à 80 µA et/ou 180 µA et/ou 320 µA.

Il est également décrit une interface électronique de connexion, comprenant un circuit électronique de protection tel que décrit précédemment, et un port de connexion comprenant au moins une broche couplée électriquement au circuit électronique de protection.

Selon un mode de réalisation particulier, le port de connexion est de type bus série universel Type-C.

Selon un mode de réalisation particulier, la broche du port de connexion correspond à une broche de canal de configuration, CC.

Selon un mode de réalisation particulier, le circuit de protection est configuré pour détecter un couplage d'un connecteur sur le port de connexion.

Selon un mode de réalisation particulier, l'interface électronique de connexion comprend en outre un microcontrôleur couplé électriquement au moins à la première borne d'entrée/sortie du circuit électronique de protection, et configuré pour délivrer des signaux de commande des premier, deuxième et troisième commutateurs tels que le premier commutateur est fermé lors d'une phase de détection d'un couplage d'un connecteur au port de connexion, puis, lorsqu'un connecteur est détecté comme étant couplé au port de connexion, le deuxième commutateur est fermé et le premier commutateur est ouvert, puis le troisième commutateur est fermé, puis le deuxième commutateur est ouvert.

Selon un mode de réalisation particulier, une durée entre la détection d'un couplage d'un connecteur au port de connexion et l'ouverture du deuxième commutateur est comprise entre 1 µs et 1 ms.

Selon un mode de réalisation particulier, le microcontrôleur comporte une unité de gestion de niveaux de tension et de courant de signaux échangés par l'intermédiaire du port de connexion.

Il est également proposé un dispositif électronique comprenant au moins une interface électronique de connexion telle que décrite précédemment.

Selon un mode de réalisation particulier, le dispositif électronique correspond à au moins l'un des dispositifs suivants : chargeur électrique, batterie externe, outil portatif, petit électroménager portatif, console de jeux, smartphone, ordinateur portable, terminal de paiement, montre connectée, écran d'ordinateur, jouet, drone, appareil photo, caméra, clé USB.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
- la figure 1 représente schématiquement un exemple de réalisation d'une interface électronique de connexion selon un mode de réalisation particulier ;
- la figure 2 représente schématiquement un exemple de réalisation d'un circuit électronique de protection selon un mode de réalisation particulier ;
- la figure 3 représente schématiquement des exemples de signaux de fonctionnement d'un circuit électronique de protection selon un mode de réalisation particulier ;
- la figure 4 représente un schéma d'un circuit de simulation du circuit électronique de protection selon un mode de réalisation particulier ;
- la figure 5 représente des exemples de signaux obtenus avec le circuit de simulation de la figure 4 ;
- la figure 6 représente symboliquement un dispositif électronique comprenant une interface électronique de connexion selon un mode de réalisation particulier.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, différents éléments tels que le microcontrôleur, le régulateur de courant, la source de tension, etc., ne sont pas détaillés. L'homme du métier sera à même de réaliser de manière détaillée ces éléments à partir de la description fonctionnelle donnée ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures dans une position normale d'utilisation.

Sans indication contraire, les gammes de valeurs indiquées incluent les bornes de ces gammes.

Dans tous les modes et exemples de réalisation décrits, pour chaque transistor à effet de champ, les électrodes de conduction correspondent à deux électrodes différentes l'une de l'autre d'un même transistor, l'une d'elles correspondant à l'électrode de source et l'autre correspondant à l'électrode de drain.

Sauf précision contraire, les expressions « environ », « approximativement », « sensiblement », et « de l'ordre de » signifient à 10 % près, de préférence à 5 % près.

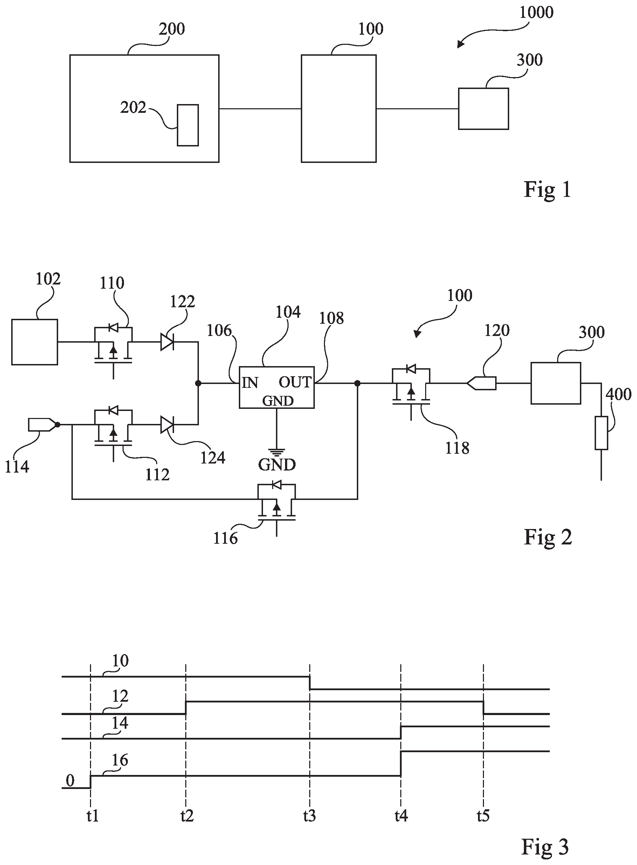

Un exemple de réalisation d'une interface électronique de connexion 1000 selon un mode de réalisation particulier est décrit ci-dessous en lien avec la figure 1.

L'interface électronique de connexion 1000 comporte un circuit électronique de protection 100 couplé électriquement entre un microcontrôleur 200 et un port de connexion 300. Cette interface électronique de connexion 1000 correspond ici à une interface USB-C.

Le port de connexion 300 est destiné à être couplé, mécaniquement et électriquement, avec un câble USB-C. Le port de connexion 300 comporte notamment un logement dans lequel le connecteur du câble USB-C est destiné à être inséré, et des broches de connexion électrique avec au moins une partie desquelles le connecteur est destiné à être couplé électriquement. Dans la configuration décrite, le port de connexion 300 de type USB-C comporte 24 broches. Au moins une des broches du port de connexion 300 est couplée électriquement au circuit électronique de protection 100. Dans l'exemple décrit, cette broche correspond à au moins une broche de canal de configuration, ou broche CC, par exemple la broche CC1 et/ou la broche CC2 telles que définies par le standard USB-C. Le circuit de protection 100 peut être couplé électriquement à une ou plusieurs autres broches du port de connexion 300, par exemple aux broches VBUS et GND du port de connexion 300 de type USB-C.

Le microcontrôleur 200 est notamment configuré pour assurer la gestion des niveaux des signaux échangés par l'intermédiaire du port de connexion 300. Dans la configuration décrite, le microcontrôleur 200 comporte notamment une unité 202 de gestion de niveaux de tension et de courant des signaux échangés, correspondant au contrôleur USB-C PD dans cet exemple.

Le circuit électronique de protection 100 correspond, dans la configuration décrite, à un circuit TCPP assurant la gestion de signaux de forte tension, ainsi que la protection contre les surtensions et les pics de courant pouvant survenir sur le port de connexion 300 et la détection d'un couplage d'un connecteur à travers le port de connexion 300.

Un exemple de réalisation du circuit électronique de protection 100 est représenté sur la figure 2.

Le circuit électronique de protection 100 comporte une source de tension 102 configurée notamment pour délivrer en sortie un courant de détection d'un couplage d'un connecteur au port de connexion 300. Sur l'exemple de la figure 2, un connecteur couplé mécaniquement et électriquement au port de connexion 300 est symbolisé par une résistance 400. Dans l'exemple de réalisation décrit, la source de tension 102 est suffisante pour délivrer un courant de détection de valeur par exemple égale à 80 µA, ce qui permet d'obtenir sur la broche VBUS un courant disponible de 0,5 A. D'autres valeurs du courant de détection sont possibles, comme par exemple 180 µA (courant disponible de 1,5 A sur la broche VBUS) ou 320 µA (courant disponible de 3 A sur la broche VBUS).

Le circuit électronique de protection 100 comporte également un régulateur de courant 104 configuré pour délivrer en sortie un courant de valeur égale à celle du courant de détection utilisé pour détecter le couplage d'un connecteur au port de connexion 300. Le régulateur de courant 104 comporte une entrée 106 sur laquelle au moins un courant d'entrée est destiné à être appliqué, et au moins une sortie 108 sur laquelle un courant de sortie est destiné à être délivré. Dans l'exemple de réalisation décrit, quel que soit le courant, ou la tension, appliqué sur l'entrée 106, la valeur du courant délivré sur la sortie 108 ne dépasse pas la valeur du courant de détection imposée par le régulateur de courant 104, c'est-à-dire 80 µA dans cet exemple.

Le circuit électronique de protection 100 comporte également un premier commutateur 110 couplé électriquement entre la sortie de la source de tension 102 et l'entrée 106 du régulateur de courant 104.

] Le circuit électronique de protection 100 comporte également un deuxième commutateur 112 couplé électriquement entre au moins une première borne d'entrée/sortie 114 du circuit électronique de protection 100 à laquelle le microcontrôleur 200 est couplé électriquement, et l'entrée 106 du régulateur de courant 104. Le microcontrôleur 200 peut être couplé électriquement à d'autres bornes d'entrée/sortie du circuit électronique de protection 100.

Le circuit électronique de protection 100 comporte également un troisième commutateur 116 couplé électriquement entre la première borne d'entrée/sortie 114 et la sortie 108 du régulateur de courant 104.

Sur l'exemple de la figure 2, le circuit électronique de protection 100 comprend en outre un quatrième commutateur 118 couplé électriquement entre la sortie 108 du régulateur de courant 104 et une deuxième borne d'entrée/sortie 120 du circuit électronique de protection 100 à laquelle le port de connexion 300 est couplé électriquement. Ce quatrième commutateur 118 peut servir notamment à protéger la broche du port de connexion 300 qui est couplée à la deuxième borne d'entrée/sortie 120 vis-à-vis par exemple d'une broche voisine sur laquelle une tension d'alimentation peut être délivrée et avec laquelle un risque de court-circuit existe. Le port de connexion 300 peut être couplé électriquement à d'autres bornes d'entrée/sortie du circuit électronique de protection 100.

Dans l'exemple de réalisation décrit, chacun des commutateurs 110, 112, 116, 118 du circuit électronique de protection 100 comporte au moins un transistor à effet de champ, par exemple un MOSFET (« Metal Oxide Semiconductor Field-Effect-Transistor » en anglais, ou transistor à effet de champ à métal oxyde semi-conducteur). Les couplages de ces transistors avec les différents éléments précédemment décrits sont réalisés par l'intermédiaire des électrodes de conduction de ces transistors, c'est-à-dire par les électrodes de source ou de drain de ces transistors.

Sur l'exemple de la figure 2, le circuit électronique de protection 100 comporte en outre une première diode 122 dont une cathode est couplée électriquement à l'entrée 106 du régulateur de courant 104 et une anode est couplée électriquement à la sortie de la source de tension 102 (à travers le premier commutateur 110 dans cet exemple), et une deuxième diode 124 dont une cathode est couplée électriquement à l'entrée 106 du régulateur de courant 104 et une anode est couplée électriquement à la première borne d'entrée/sortie 114 (à travers le deuxième commutateur 112 dans cet exemple).

Dans l'exemple de réalisation décrit, le microcontrôleur 200 est configuré pour délivrer des signaux de commande au moins aux premier, deuxième et troisième commutateurs 110, 112, 116. Dans le cas de commutateurs correspondant à des MOSFETs, ces signaux de commande sont destinés à être appliqués, directement ou non, sur les grilles de ces MOSFETs. La commande du quatrième commutateur 118 peut être réalisée en interne du circuit électronique de protection 100 et tel que ce quatrième commutateur 118 soit bloqué en présence d'une surtension.

Selon un exemple de réalisation, le circuit électronique de protection 100 peut être réalisé en technologie BCD ou BCDMOS, c'est-à-dire sous la forme d'un circuit pouvant comporter des éléments bipolaire, CMOS (« Complementary metal-oxide-semiconductor » en anglais, ou métal oxyde semi-conducteur complémentaire) et DMOS (« Double-diffused metal-oxide-semiconductor » en anglais, ou métal oxyde semi-conducteur à double diffusion), et le microcontrôleur 200 peut être réalisé en technologie CMOS, par exemple sur silicium.

Un exemple de fonctionnement de l'interface électronique de connexion 1000 est décrit ci-dessous en lien avec la figure 3 sur laquelle des signaux de fonctionnement de l'interface électronique de connexion 1000 sont représentés. Dans cet exemple, la référence 10 désigne le signal de commande du premier commutateur 110, la référence 12 désigne le signal de commande du deuxième commutateur 112, la référence 14 désigne le signal de commande du troisième commutateur 116. Un état haut d'un des signaux de commande 10, 12, 14 correspond à une mise à un état fermé, ou passant, du commutateur sur lequel le signal est appliqué, et un état bas d'un des signaux de commande 10, 12, 14 correspond à une mise à un état ouvert, ou bloqué, du commutateur sur lequel le signal est appliqué. La référence 16 désigne le courant obtenu sur la deuxième borne d'entrée/sortie 120 du circuit électronique de protection 100.

Lors d'une phase de détection de couplage d'un connecteur au port de connexion 300, le premier commutateur 110 est fermé, ou passant. Le régulateur de courant 104 reçoit sur son entrée 106 la tension délivrée en sortie de la source de tension 102 à travers le premier commutateur 110. En l'absence de connecteur couplé au port de connexion 300, aucun appel de courant ne se produit et aucun courant n'est délivré sur la sortie 108 du régulateur de courant 104.

L'instant t1 indiqué sur la figure 3 correspond à l'instant auquel un connecteur est couplé au port de connexion 300. Le régulateur de courant 104 délivre alors sur sa sortie 108 le courant de détection ici égal à 80 µA.

Suite au couplage d'un connecteur au port de connexion 300, le microcontrôleur 200 va commander les commutateurs 110, 112 et 116 de manière à basculer de la source de tension 102 à la première borne d'entrée/sortie 114. A un instant t2 intervenant après l'instant t1 et qui est déclenché par le microcontrôleur 200 lorsque les signaux sont présents sur la première borne d'entrée/sortie 114, une commande de fermeture, ou de mise à l'état passant, est envoyée au deuxième commutateur 112 (passage de l'état « 0 » à l'état « 1 » du signal de commande 12 dans cet exemple). Le régulateur de courant 104 reçoit alors sur son entrée 106 la tension délivrée par la source de tension 102 ainsi qu'un courant de signal utile, par exemple un signal d'information à transmettre sur le connecteur, envoyé par le microcontrôleur 200 à destination du connecteur couplé au port de connexion 300. La valeur du courant du signal utile est par exemple égale à 320 µA. Le régulateur de courant 104 ne délivre sur sa sortie 108 qu'un courant ne dépassant pas la valeur du courant de détection, ici 80 µA, quelle que soit la somme des courants ou la tension en entrée.

A un instant t3 intervenant après l'instant t2, une commande d'ouverture, ou de blocage, est envoyée au premier commutateur 110 (passage de l'état « 1 » à l'état « 0 » du signal de commande 10 dans cet exemple). Le régulateur de courant 104 reçoit alors sur son entrée 106 uniquement le courant de signal utile envoyé par le microcontrôleur 200. Le régulateur de courant 104 assure toutefois un maintien de la valeur du courant délivré à sa sortie 108 à une valeur ne dépassant pas celle du courant de détection.

A un instant t4 intervenant après l'instant t3, une commande de fermeture, ou de mise à l'état passant, est envoyée au troisième commutateur 116 (passage de l'état « 0 » à l'état « 1 » du signal de commande 14 dans cet exemple). Le courant de signal utile envoyé par le microcontrôleur 200 est alors transmis à travers le régulateur de courant 104 et également à travers le troisième commutateur 116. Le courant envoyé sur la deuxième borne d'entrée/sortie 120 augmente alors et est égale à la valeur de courant total du signal utile, soit 320 µA dans cet exemple.

A un instant t5 intervenant après l'instant t4, une commande d'ouverture, ou de blocage, est envoyée au deuxième commutateur 112 (passage de l'état « 1 » à l'état « 0 » du signal de commande 12 dans cet exemple). Le signal utile n'est alors plus envoyé en entrée du régulateur de tension 104 et passe en totalité à travers le troisième commutateur 116 sans passer par le régulateur de tension 104.

Selon un exemple de réalisation, une durée entre la détection du couplage d'un connecteur au port de connexion 300, c'est-à-dire l'instant t1, et l'ouverture du deuxième commutateur 112, c'est-à-dire l'instant t5, est comprise entre 1 µs et 1 ms, en fonction notamment de la durée nécessaire au réveil du microcontrôleur 200.

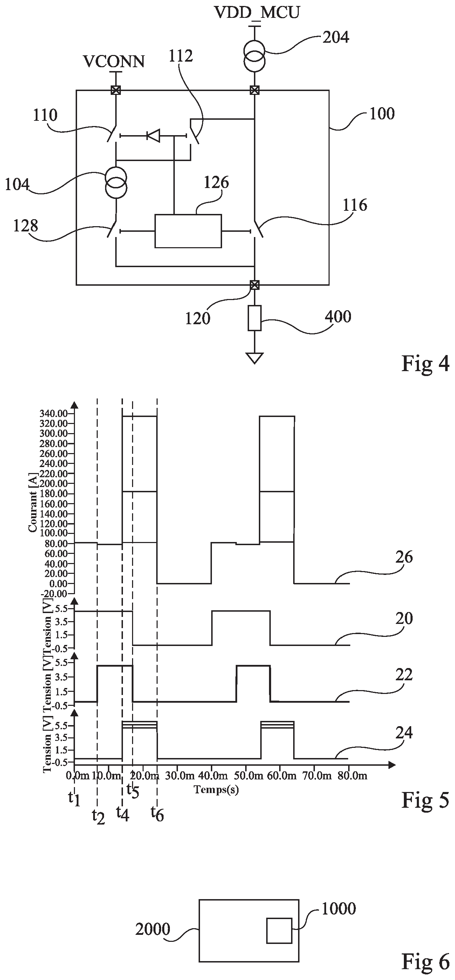

La figure 4 représente un schéma d'un circuit de simulation du circuit électronique de protection 100 selon un mode de réalisation particulier. Sur la figure 4, la source de courant du microcontrôleur 200 servant à l'émission du signal utile est désignée par la référence 204. La résistance 400, simulant un connecteur, est couplée à la deuxième borne d'entrée/sortie 120 du circuit électronique de protection 100. La valeur de cette résistance 400 est choisie pour être similaire à celle formée par le port de connexion 300 et par un connecteur couplé au port de connexion 300. De plus, dans cet exemple, la commande des commutateurs 110, 112, 116 est réalisée par une machine à états désignée par la référence 126. En outre, pour cette simulation, le deuxième commutateur 112 est commandé de manière complémentaire au premier commutateur 110, l'un de ces deux commutateurs étant fermé, ou passant, lorsque l'autre est ouvert, ou bloqué. Comme sur la figure 2, le régulateur de courant 104 est ici alimenté par la source de tension 102 représentée par la tension « VCONN ». Enfin, un commutateur supplémentaire 128 est couplé entre la sortie du régulateur de courant 104 et la deuxième borne d'entrée/sortie 120 afin de pouvoir simuler, en fermant ce commutateur supplémentaire 128, la connexion d'un connecteur au port de connexion 300.

La figure 5 représente des signaux de simulation obtenus avec le circuit de la figure 4. La référence 20 désigne le signal de commande du commutateur supplémentaire 128, la référence 22 désigne le signal de commande du deuxième commutateur 112 et également le signal de commande inverse du premier commutateur 110, et la référence 24 désigne le signal de commande du troisième commutateur 116. Dans cette simulation, la période entre les instants t2 et t3 pendant laquelle les premier et deuxième commutateurs 110, 112 sont dans des états similaires n'est pas visible car très courte. Enfin, la référence 26 désigne le courant obtenu sur la deuxième borne d'entrée/sortie 120.

Dans cette simulation, le couplage d'un connecteur au port de connexion 300 est simulé en fermant le commutateur supplémentaire 128, cette fermeture se produisant à l'instant t1. Comme précédemment décrit en lien avec la figure 3, à l'instant t2, le deuxième commutateur 112 est fermé. Comme le montre le signal 26, la valeur du courant obtenu en sortie du circuit électronique de protection 100, sur la deuxième borne d'entrée/sortie 120, n'est pas impactée par la fermeture du deuxième commutateur 112, à l'exception d'une très faible réduction de la valeur du courant obtenu en sortie en raison de l'alimentation du régulateur de courant 104 par la source de courant 204 et non plus par la source de tension 102, le courant délivré par la source de courant 204 étant légèrement plus faible que celui obtenu avec la source de tension 102. A l'instant t4, le troisième commutateur 116 est fermé, amenant le courant délivré par la source de courant 204 directement sur la deuxième borne d'entrée/sortie 120. Sur l'exemple de la figure 5, le signal de commande du troisième commutateur 116 est simulé avec différentes valeurs, et différents niveaux de courant délivrés par la source 204_(80 µA, 180 µA et 320 µA dans cet exemple). A l'instant t5, le deuxième commutateur 112 et le commutateur supplémentaire 128 sont ouverts. Enfin, à un instant t6, la simulation est achevée en ouvrant le troisième commutateur 116. Cette séquence de simulation est répétée une deuxième fois.

L'interface électronique de connexion 1000 permet, grâce à l'utilisation du circuit électronique de protection 100 pour réaliser la détection du couplage d'un connecteur au port de connexion 300, de limiter la consommation de courant liée à cette détection. Par exemple, lorsque le microcontrôleur 200 fonctionne avec une tension de 3,3 V, le courant de détection consommé peut être d'au plus 10 µA, et lorsque le microcontrôleur 200 fonctionne avec une tension de 5 V, le courant de détection consommé peut être d'au plus 30 µA. En effet, le microcontrôleur 200 peut être mis en « stop mode » qui correspond à un état qui consomme très peu, et être réveillé avec une interruption par le TCPP lors de la détection de l'évènement à l'instant t1.

Le circuit électronique de protection 100 permet de gérer la transition entre l'utilisation de la source de tension 102 servant à la détection d'un couplage d'un connecteur au port de connexion 300 et l'utilisation de la source de courant du microcontrôleur 200 servant à la transmission de signaux utiles sur le connecteur couplé au port de connexion 300. Le circuit électronique de protection 100 permet de gérer cette transition en évitant tout état de haute impédance sur le port de connexion 300, notamment sur la ou les broches du port de connexion 300 servant à la transmission des signaux utiles.

Le circuit électronique de protection 100 peut permettre de réaliser, après la détection d'un couplage d'un connecteur au port de connexion 300, un transition de sources de courant de type MBB, qui évite tout état de haute impédance, avec trois états intermédiaires, ce qui permet également d'éviter tout pic de courant sur le port de connexion 300 pendant cette transition, un tel pic de courant pouvant être hors des limites permises par la norme dans laquelle le circuit 100 est utilisé.

L'interface de connexion 1000 peut faire partie d'un dispositif électronique 2000 tel que représenté symboliquement sur la figure 6. Par exemple, le dispositif électronique 2000 peut correspondre à l'un des dispositifs électroniques suivants : chargeur électrique, batterie externe, outil portatif, petit électroménager portatif, console de jeux, smartphone, ordinateur portable, terminal de paiement, montre connectée, écran d'ordinateur, jouet, drone, appareil photo, caméra, clé USB, etc.

Le circuit 100 et l'interface 1000 sont par exemple destinés à l'industrie automobile. L'électrification des véhicules automobiles génère un niveau de contenu électronique de plus en plus élevé dans les véhicules. Le circuit 100 et l'interface 1000 peuvent être utilisés dans un dispositif comprenant par exemple des thyristors, des redresseurs, des diodes de suppression des tensions transitoires à haute tension, des modules, etc. destinés à être incorporés dans lesdits véhicules. L'automatisation de la conduite génère également un contenu électronique de plus en plus important dans les véhicules. Le circuit 100 et l'interface 1000 peuvent être utilisés dans un dispositif comprenant par exemple des diodes de suppression des tensions transitoires à haute tension, une protection contre les décharges électromagnétiques et des filtres de mode commun pour protéger contre les risques électriques dans l'électronique complexe émergente.

Le circuit 100 et l'interface 1000 sont par exemple destinés à être utilisés dans l'électronique personnelle, par exemple dans le but d'augmenter le contenu radiofréquence, dans les dispositifs de connexions 5G ou plus généralement dans les dispositifs connectés. Le circuit 100 et l'interface 1000 font par exemple partie d'un smartphone ou d'une partie d'un réseau de l'internet des objets. Le dispositif comprenant le circuit 100 et l'interface 1000 est par exemple connecté par 5G, WIFI ou bande ultra-blanche. L'appareil comprend par exemple des interfaces à haut débit, par exemple avec un filtrage avancé et une protection contre les décharges électromagnétiques.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Circuit électronique de protection (100) comprenant au moins :
- une source de tension (102) configurée pour délivrer en sortie un courant de détection de couplage d'un connecteur à un port de connexion (300) destiné à être couplé électriquement au circuit électronique de protection (100) ;
- un régulateur de courant (104) configuré pour délivrer en sortie (108) un courant de valeur maximale égale à celle du courant de détection ;
- un premier commutateur (110) couplé électriquement entre la sortie de la source de tension (102) et une entrée (106) du régulateur de courant (104) ;
- un deuxième commutateur (112) couplé électriquement entre une première borne d'entrée/sortie (114) du circuit électronique de protection (100) et l'entrée (106) du régulateur de courant (104) ;
- un troisième commutateur (116) couplé électriquement entre la première borne d'entrée/sortie (114) et la sortie (108) du régulateur de courant (104).

2. Circuit électronique de protection (100) selon la revendication 1, comprenant en outre un quatrième commutateur (118) couplé électriquement entre la sortie (108) du régulateur de courant (104) et une deuxième borne d'entrée/sortie (120) du circuit électronique de protection (100) à laquelle le port de connexion (300) est destiné à être couplé électriquement.

3. Circuit électronique de protection (100) selon l'une quelconque des revendications précédentes, dans lequel chacun des commutateurs (110, 112, 116, 118) comporte au moins un transistor à effet de champ.

4. Circuit électronique de protection (100) selon l'une quelconque des revendications précédentes, comportant en outre une première diode (122) dont une cathode est couplée électriquement à l'entrée (106) du régulateur de courant (104) et une anode est couplée électriquement à la sortie de la source de tension (102), et une deuxième diode (124) dont une cathode est couplée électriquement à l'entrée (106) du régulateur de courant (104) et une anode est couplée électriquement à la première borne d'entrée/sortie (114).

5. Circuit électronique de protection (100) selon l'une quelconque des revendications précédentes, dans lequel régulateur de courant (104) est configuré pour délivrer le courant de détection de valeur égale à 80 µA et/ou 180 µA et/ou 320 µA.

6. Interface électronique de connexion (1000), comprenant un circuit électronique de protection (100) selon l'une quelconque des revendications précédentes, et un port de connexion (300) comprenant au moins une broche couplée électriquement au circuit électronique de protection (100).

7. Interface électronique de connexion (1000) selon la revendication 6, dans lequel le port de connexion (300) est de type bus série universel Type-C.

8. Interface électronique de connexion (1000) selon la revendication 7, dans lequel la broche du port de connexion (300) correspond à une broche de canal de configuration, CC.

9. Interface électronique de connexion (1000) selon l'une quelconque des revendications 6 à 8, dans lequel le circuit de protection (100) est configuré pour détecter un couplage d'un connecteur sur le port de connexion (300).

10. Interface électronique de connexion (1000) selon la revendication 9, comprenant en outre un microcontrôleur (200) couplé électriquement au moins à la première borne d'entrée/sortie (114) du circuit électronique de protection (100), et configuré pour délivrer des signaux de commande des premier, deuxième et troisième commutateurs (110, 112, 116) tels que le premier commutateur (110) est fermé lors d'une phase de détection d'un couplage d'un connecteur au port de connexion (300), puis, lorsqu'un connecteur est détecté comme étant couplé au port de connexion (300), le deuxième commutateur (112) est fermé et le premier commutateur (110) est ouvert, puis le troisième commutateur (116) est fermé, puis le deuxième commutateur (112) est ouvert.

11. Interface électronique de connexion (1000) selon la revendication 10, dans lequel une durée entre la détection d'un couplage d'un connecteur au port de connexion (300) et l'ouverture du deuxième commutateur (112) est comprise entre 1 µs et 1 ms.

12. Interface électronique de connexion (1000) selon l'une quelconque des revendications 10 ou 11, dans lequel le microcontrôleur (200) comporte une unité (202) de gestion de niveaux de tension et de courant de signaux échangés par l'intermédiaire du port de connexion (300).

13. Dispositif électronique (2000) comprenant au moins une interface électronique de connexion (1000) selon l'une quelconque des revendications 6 à 12.

14. Dispositif électronique (2000) selon la revendication 13, correspondant à au moins l'un des dispositifs suivants : chargeur électrique, batterie externe, outil portatif, petit électroménager portatif, console de jeux, smartphone, ordinateur portable, terminal de paiement, montre connectée, écran d'ordinateur, jouet, drone, appareil photo, caméra, clé USB.
